# EUROPÄISCHE PATENTANMELDUNG

(11) **EP 2 508 478 A1**
(43) Veröffentlichungstag der Anmeldung: **10.10.2012**
(21) Anmeldenummer: 12159820.5
(22) Anmeldetag: 16.03.2012
(51) Int. Cl.: C01B 39/02

(54) **Photokatalytisch aktiver natürlicher Zeolith in alkalischen Baustoffsystemen**

(30) Priorität: 17.03.2011 AT 3672011
(71) Anmelder: Paltentaler Minerals GmbH & Co KG, 8903 Lassing bei Selzthal (AT)
(72) Erfinder: Römer, Andreas, 2620 Hafning (AT)
(74) Vertreter: Burger, Hannes

(57) **Zusammenfassung**

Die Erfindung betrifft den Einsatz von hydrophobierten, photokatalytisch aktiven natürlichen Zeolith für die Anwendung in alkalischen Bindemittelsystemen auf Basis von Zement, Silikaten oder Kalkhydrat, wobei als hydrophobierter photokatalytisch aktiver natürlicher Zeolith ein natürlicher Zeolith genommen wird, der zunächst gemeinsam mit Nanopartikeln einer photokatalytisch aktiven Substanz gemahlen wird und nachfolgend durch Silanisierung hydrophobiert wird, und wobei die Hydrophobierung des Zeoliths soweit erfolgt, dass nach der Vermischung des hydrophobierten photokatalytisch aktiven Zeoliths mit alkalischen Bindemittelsystemen einerseits seine Absorptionsfähigkeiten für organische Schadstoffe und die photokatalytische Reaktivität erhalten bleiben, und andererseits die Verarbeitungsfähigkeit und Stabilität des alkalischen Bindemittelsystems durch die Zugabe des photokatalytisch aktiven und hydrophobierten Zeoliths nicht beeinträchtigt wird.

## Beschreibung

Die Erfindung betrifft den Einsatz von hydrophobierten, photokatalytisch aktiven natürlichen Zeolith für die Anwendung in alkalischen Bindemittelsystemen auf Basis von Zement, Silikaten oder Kalkhydrat, wobei als hydrophobierter photokatalytisch aktiver natürlicher Zeolith ein natürlicher Zeolith genommen wird, der zunächst gemeinsam mit Nanopartikeln einer photokatalytisch aktiven Substanz gemahlen wird und nachfolgend durch Silanisierung hydrophobiert wird, und wobei die Hydrophobierung des Zeoliths soweit erfolgt, dass nach der Vermischung des hydrophobierten photokatalytisch aktiven Zeoliths mit alkalischen Bindemittelsystemen einerseits seine Absorptionsfähigkeiten für organische Schadstoffe und die photokatalytische Reaktivität erhalten bleiben, und andererseits die Verarbeitungsfähigkeit und Stabilität des alkalischen Bindemittelsystems durch die Zugabe des photokatalytisch aktiven und hydrophobierten Zeoliths nicht beeinträchtigt wird.

Photokatalytisch aktive chemische Verbindungen, die unter anderem in der Bauchemie und in der Baustoffindustrie eingesetzt werden, betreffen vor allem photokatalytisch aktives Titandioxid, aber auch photokatalytisch aktives Zinkoxid, aktives Zinksulfid oder Zirkoniumoxid. In vielen Fällen können diese Verbindungen selbst mit Metallsalzen dotiert sein. Die photokatalytisch aktive Substanzwird dabei in Form von sehr kleinen Teilchen, bevorzugt als Nanopartikel, in solche nichtmetallischen Baustoffzubereitungen wie zum Beispiel Putze oder Farben oder Grundierungen eingearbeitet, die als dünnschichtige Beschichtungen auf Bauwerken eingesetzt werden. Ihre Funktion liegt meist in der photokatalytischen Oxidation von organischen und anorganischen Verbindungen wie Schadgasen, Schadstoffen, Ammoniak, Schwefelwasserstoff, Geruchsstoffe oder anderen unerwünschten Substanzen, wie ölige Bestandteile, die auf den Oberflächen der Beschichtungen anhaften oder die sich in der Umgebungsluft befinden. Sie dienen daher der photokatalytischen Selbstreinigung oder dem photokatalytischen Abbau gasförmiger und fester Schadstoffe.

Die photokatalytisch aktiven Substanzen liegen in der Baustoffzubereitung als Nanopartikel vor, die physikalisch-chemisch oder chemisch mit der Matrix der Zubereitung verbunden sind und so eine hohe Oberfläche aufweisen, auf der die katalytischen Reaktionen ablaufen. Die photokatalytische Aktivität hängt daher entscheidend von der Zugänglichkeit dieser Oberfläche für die zu oxidierenden unerwünschten Verbindungen, für Sauerstoff und für das Licht sowie vom Ausmaß der zugänglichen katalytisch wirkenden Oberfläche selbst ab.

Wenn die photokatalytischen Beschichtungen an Innenflächen von Bauwerken angebracht werden, liegt ihr Hauptzweck meist in der Entgiftung von Innenraumschadstoffen wie Formaldehyd, Nikotin, Fettdünsten, Kohlenmonoxid oder anderen gasförmigen organischen Schadstoffen. Auch werden Verunreinigungen wie zum Beispiel ölige Ruße, Nikotin, Fette oder Haushaltsöle, die sich auf die Beschichtungen niederschlagen, von den photokatalytischen Nanopartikeln zersetzt beziehungsweise abgebaut. Wenn die photokatalytischen Beschichtungen an Außenflächen angebracht sind, dient dies oft dem Zweck der Zersetzung von Schmutzpartikeln, die durch Immission auf die Flächen gelangen. Die Oxidation der Schadstoffe kann bis zur Bildung von Kohlendioxid erfolgen und somit eine vollständige chemische Zersetzung und Entgiftung bewirken.

Um die photokatalytischen Nanopartikel in der Matrix der dünnschichtigen Baustoffsysteme zu binden, werden besonders Beschichtungen auf Basis organischer Bindemittel eingesetzt. Leider werden diese Bindemittel durch den Photokatalysator langfristig zerstört. Festigkeitsverluste und in weiterer Folge eine hohe Kreidung - das heißt vor allem die Ablösung der Nanopartikel aus den Beschichtungen -, resultiert daraus. Dieser Nachteil ist in der Praxis von großer Bedeutung, da er nicht nur zur Verringerung der katalytischen Eigenschaften der Beschichtung führt, sondern auch photokatalytische Nanopartikel unkontrolliert in die Umwelt entlässt, was als leaching bezeichnet wird.

In alkalischen Baustoffsystemen wurde ein teilweiser und mit der Zeit fortschreitender Verlust der photokatalytischen Aktivität von ursprünglich photokatalytisch aktiven Substanzen beobachtet, der dem hohen pH-Wert in Verbindung mit dem chemischen Milieu solcher Baustoffsysteme zugeschrieben wird, wobei die exakten Ursachen dafür noch nicht bekannt sind. In solchen Systemen tritt also mit der Zeit ein Aktivitätsverlust ein, der zu einem teilweisen oder gänzlichen Funktionsverlust von Beschichtungen führt, in denen die Photokatalyse eine wichtige Funktion ausübt. Dieser Funktionsverlust beschränkt sich nicht nur auf die photokatalytische Aktivität, sondern auch auf Schutzfunktionen wie z.B. Wasserabweisung, C02-Dichtigkeiten, Reinigungsfähigkeiten der Beschichtungen für den Baukörper. Dies gilt im Innen- wie im Außenbereich des Gebäudes.

Da die photokatalytisch aktiven Substanzen in bautechnischen Beschichtungen die Luftschadstoffe nur dann zersetzen können, wenn die Schadstoffmoleküle in Kontakt mit der Oberfläche des Photokatalysators treten, ist die Abbaugeschwindigkeit meist niedrig. Sie wird erhöht, wenn der Photokatalysator in Verbindung mit einem Träger eingesetzt wird, der eine hohe .Absorptionsfähigkeit für die organischen Schadstoffe aufweist, da dann diese Schadstoffe in unmittelbarer Nähe des Photokatalysators aufkonzentriert werden und eine höhere Anzahl von Schadstoffmolekülen pro Zeiteinheit mit der Katalysatoroberfläche in Kontakt treten und zersetzt werden können.

Solche Trägermaterialien mit hohen Absorptionsfähigkeiten für organische Luftschadstoffe sind beispielsweise Zeolithe. Zeolithe bilden eine große Familie von kristallinen Aluminiumsilikaten, von denen einige wie Phillipsit, Chabazit, Mordenit, Erionit, Heulandit, Klinoptilolith oder Natrolith in der Natur vorkommen, andere wie Linde Typ A Zeolith oder Zeolith ZSM 5 synthetisch hergestellt werden. Eine umfangreiche Darstellung der Eigenschaften von Zeolithen findet sich bei Barrer R.M.: Zeolites and Clay Minerals as Sorbents and Molecular Sieves, Academic Press London, 1978.

Klinoptilolith ist ein natürliches Mineral aus der Kristaligruppe der Zeolithe mit sorptiven und ionentauschenden Eigenschaften, wie in "Reviews in Mineralogy & Geochemistry Volume 45, 2001" hinreichend beschrieben ist. Andere natürliche und synthetische Zeolithe wie Phillipsit, Erionit, Chabazit, Mordenit, Natrolith oder Linde Typ A Zeolith besitzen ähnliche chemische Eigenschaften und sind in ähnlichem Ausmaß zur Aufnahme von Wasser oder gasförmigen Stoffen geeignet. Klinoptilolith und vereinzelt auch andere natürliche Zeolithe wie Phillipsit, Erionit, Chabazit, Mordenit oder Natrolith werden vielfach als Geruchsabsorber, als Absorptionsmittel für gasförmige Schadstoffe eingesetzt. Die natürliche Form von Klinoptilolith und anderen natürlichen Zeolithen wird erhalten, indem das Mineral in Lagerstätten abgebaut, zerkleinert und gegebenenfalls getrocknet wird. Da Klinoptilolith und andere natürliche Zeolithe als natürliche Minerale nie völlig rein gewonnen werden, sondern immer in Vergesellschaftung mit Begleitmineralien wie Feldspaten, Smektit, Montmorillonit oder Christobalit oder anderen Mineralien vorkommen, werden auch Gesteine mit einem Anteil von über 50% natürlicher Zeolith der Einfachheit halber als natürlicher Zeolith bezeichnet. Da Klinoptilolith sehr oft mit dem chemisch ähnlichen Mineral Heulandit vergesellschaftet ist, werden Gesteine mit einem Anteil von über 50% der Summe von Klinoptilolith und Heulandt in der Literatur wie auch hier ebenfalls der Einfachheit halber als natürlicher Klinoptilolith bezeichnet.

In alkalischen Baustoffsystemen wie Systeme auf Basis von Wasserglas, Kieselsol, oder einer Kombination aus Wasserglas und Kieselsol oder Kieselsäureester oder Systeme auf Basis von Zement, Kalkhydrat oder einer Mischung aus Zement und Kalkhydrat werden bislang noch keine natürlichen Zeolithe in Verbindung mit photokatalytisch aktivem Titandioxid eingesetzt. Die Gründe dafür liegen darin, dass natürliche Zeolithe zum einen im alkalischen Milieu nicht stabil sind, zum anderen darin, dass natürliche Zeolithe wegen ihrer silikatischen Bestandteile und ihrem Anteil an zwei- und dreiwertigen Ionen wie Calcium, Magnesium, Aluminium, Eisen, und Strontium sehr rasch mit wässrigen Lösungen von Wasserglas, Kieselsol oder Kieselsäureester chemisch reagieren, wodurch die Mischungen ihre Verarbeitungsfähigkeit verlieren. Aber auch die Zeolithkomponente verliert ihre besonderen sorptiven Eigenschaften zum Teil oder gänzlich. Der Verlust der Verarbeitungsfähigkeit des Baustoffes Kann sich durch Verklumpung der Mischung oder deren Erstarren zu einer festen Masse zeigen.

Zeolithe, die in Baustoffsystemen als Trägermaterial für photokatalytisch aktive Substanzen wie Titan(IV)-oxid dienen, sind in der Literatur bereits beschrieben. Die Anmeldung JP2005144431 Functional ceramic particle colloid beschreibt ein Verfahren zur Herstellung von Mischungen von Ti(IV)oxid mit Mineralen zu katalytischen sowie zu schadstoffabbauenden oder bioziden Anwendungen. Es bezieht sich jedoch nicht auf alkalische Baustoffsysteme. Ähnliches gilt für die Anmeldung JP2001090214 Building material having adsorption decomposing power of harmful substance. Es werden auch hier keine Angaben zum Verhalten des beschriebenen Materials in alkalischen, silikatischen Baustoffsystemen gemacht.

Die Fachpublikation von "Kuwahara Y. et al.: Fabrication of hydrophobic zeolites using triethoxyfluorosilane and their application for photocatalytic degradation of acetaldehyde, in: Topics in Catalysis 52: 643-648 (2009)" beschreibt die Herstellung eines durch Silanisierung hydrophobierten synthetischen Zeoliths Y, der Nanopartikel von photokatalytischem Titan(IV)oxid enthält, sowie seine Anwendung zur Zersetzung von Acetaldehyd in wässrigen Systemen. Die Hydrophobierung erfolgt hier zur Verbesserung der Aufnahmefähigkeit für die organische Substanz Acetaldehyd, da organische Substanzen an stark hydrophilen Oberflächen wie unbehandelte Zeolithe meist schlecht absorbieren. Das Verfahren eignet sich aber nicht für die kostengünstige Herstellung großer Mengen photokatalytisch aktivem Zeolith, wie sie in Baustoffzubereitungen benötigt werden, da es sehr aufwändig ist und überdies der Preis von Zeolith Y ein Vielfaches des Preises natürlicher Zeolithe wie beispielsweise Klinoptilolith ausmacht. In dem Fachartikel wurde daher die Funktionalität des photokatalytisch aktiven hydrophobierten Zeoliths in Baustoffsystemen nicht gezeigt.

Die Herstellungsverfahren photokatalytisch aktiver Zeolithe auf Basis von synthetischen Zeolithen können nicht einfach auf natürliche Zeolithe übertragen werden, da die unterschiedlichen Eigenschaften synthetischer und natürlicher Zeolithe zu nicht vorhersagbaren unterschiedlichen Eigenschaften der hergestellten Produkte führen können. Diese Unterschiede betreffen zunächst die Reinheit der Zeolithe. Natürliche Zeolithe weisen ein wesentlich breiteres Spektrum an Begleitmineralien und Verunreinigungen auf als synthetische Zeolithe, die auf die Eigenschaften des Zeoliths Einfluß nehmen können. Weiters werden natürliche Zeolithe durch Mahlung von Zeolithgesteinen gewonnen und können daher in wesentlich gröberen Korngrößen als synthetische Zeolithe erhalten werden. Synthetische Zeolithe werden durch Kristallisation aus Lösungen erhalten, wodurch ihre Korngröße in industriellen Herstellungsverfahren auf wenige Mikrometer beschränkt bleibt. Es ist daher davon auszugehen, dass die Veränderung der Zeolithoberfläche beispielsweise durch Beladung mit photokatalytisch aktiven Substanzen unterschiedliche Eigenschaften bei natürlichen und bei synthetischen Zeolithen hervorrufen wird.

Die technische Aufgabe der Erfindung ist es daher, natürlichen Zeolith so zu präparieren, dass das Präparat eine hohe photokatalytische Reaktionsfähigkeit bei der Zersetzung von organischen Schadstoffen aufweist, und gleichzeitig dieses Präparat als Additiv in alkalischen Bindemittelsystemen auf Basis von Wasserglas, Kieselsol, oder einer Kombination aus Wasserglas und Kieselsol oder Kieselsäureester oder auf Basis von Zement, Kalkhydrat oder einer Mischung aus Zement und Kalkhydrat verarbeitet werden kann, ohne die absorptiven Eigenschaften des Zeoliths oder die photokatalytischen Eigenschaften zu verlieren.

Die Aufgabe wird dadurch gelöst, dass ein hydrophobierter, photokatalytisch aktiver natürlicher Zeolith für die Anwendung in alkalischen Bindemittelsystemen auf Basis von Zement, Silikaten oder Kalkhydrat gewählt wird, wobei als hydrophobierter photokatalytisch aktiver natürlicher Zeolith ein natürlicher Zeolith genommen wird, der zunächst gemeinsam mit Nanopartikeln einer photokatalytisch aktiven Substanz gemahlen wird und nachfolgend durch Silanisierung hydrophobiert wird, und wobei die Hydrophobierung des Zeoliths soweit erfolgt, dass nach der Vermischung des hydrophobierten photokatalytisch aktiven Zeoliths mit silikatischen Bindemittelsystemen einerseits seine Absorptionsfähigkeiten für organische Schadstoffe und die photokatalytische Reaktivität erhalten bleiben, und andererseits die Verarbeitungsfähigkeit und Stabilität des alkalischen Bindemittelsystems durch die Zugabe des hydrophobierten Zeoliths nicht beeinträchtigt wird.

Dabei kann der hydrophobierte, photokatalytisch aktive Zeolith beispielsweise hergestellt werden, indem in einem ersten Schritt während der Vermahlung des Zeoliths in einer Gesteinsmühle eine handelsübliche Zubereitung eines Photokatalysators in die Gesteinsmühle gegeben wird, sodass die Verteilung des Photokatalysators auf der Oberfläche des Zeoliths während der Zerkleinerung erfolgt und der Energieeintrag durch die Mahlwerkzeuge ausgenutzt werden kann, um eine homogene Verteilung des Photokatalysators auf dem Zeolith zu erreichen.

Es kommt darin nämlich während der Mahlung zu einem intensiven Oberflächenkontakt zwischen den Zeolith- und den photokatalytisch aktiven Nanopartikeln kommt, woraus eine intensivere Anhaftung der Nanopartikeln auf der Zeolithoberfläche resultiert. Ausserdem wird die Mahlenergie auch dazu ausgenutzt, der Zusammenballung einzelner Nanopartikeln zu grösseren Aggregaten von Nanopartikeln entgegenzuwirken beziehungsweise solche Aggregate, die sich bereits gebildet haben, wieder zu zerkleinern, sodass sich die einzelnen Nanopartikel gleichmässig über die Zeolith-Oberfläche verteilen können. Die Nanopartikel werden damit auch mechanisch in den Poren und Höhlen der Zeolithpartikel fest verankert und befestigt, sodass ihre Ablösung durch physikalische und chemische Prozesse dadurch erheblich verringert wird.

Die feine Verteilung der Nanopartikeln auf der Zeolith Oberfläche führt dazu, dass eine grössere Anzahl von reaktiven Zentren auf den Nanopartikeln für organische Substanzen zugänglich sind, also die katalytisch wirkende Oberfläche vergrössert wird und sich damit der photokatalytische Umsatz erhöht.

Als handelsübliche Zubereitung eines Photokatalysators kann beispielsweise Titan(IV)-oxid oder Zirkonium(IV)-oxid oder Zink(IV)-oxid in Form von stabilisierten Suspensionen von Nanopartikeln in der Menge von 0,1%(w/w) bis zu 10%(w/w) eingesetzt werden, aber auch als Feststoff in Pulverform. Der Photokatalysator kann mit weiteren Elementen oder chemischen Verbindungen wie beispielsweise Kohlenstoff oder Metalle zur Verstärkung seiner photokatalytischen Eigenschaften dotiert sein. Die Einbringung des Photokatalysators in die Gesteinsmühle erfolgt beispielsweise durch Einsprühen einer Suspension oder Zudosierung von Pulver der Photokatalysator-Zubereitung direkt in den Mahlraum der Mühle während der Mahlung des natürlichen Zeoliths. Als natürlicher Zeolith kann jeder beliebige natürliche Zeolith genommen werden, vorzugsweise jedoch ein Klinoptilolith, Chabazit, Phillipsit, Natrolith oder Erionit, besonders bevorzugt ein Klinoptilolith.

Im zweiten Schritt der Herstellung von hydrophobiertem photokatalytisch aktivem Zeolith wird der aus dem ersten Herstellungsschritt erhaltene photokatalytisch aktive Zeolith durch Silanisierung hydrophobiert. Dabei kann die Silanisierung beispielsweise durch einfaches Besprühen des photokatalytisch aktiven Zeolithpulver mit einem handelsüblichen organischen Silanpräparat für bauchemische Zwecke während gleichzeitiger Umwälzung des besprühten Pulvers zum Zwecke der Durchmischung erzeugt werden. Die Umwälzung hat so zu erfolgen, dass die Sprühflüssigkeit einen möglichst großen Teil des Pulvers benetzt und dadurch eine Silanisierung der pulverförmigen photokatalytisch aktiven Zeolithoberfläche bewirkt.

Es ist von Vorteil, wenn dem Silan Siloxanemulgatoren beigemengt sind, da in diesem Fall die Hydrophobierung gleichmäßig erfolgt und je nach Menge des aufgebrachten Silans ein exakter Hydrophobierungsgrad des photokatalytisch aktiven Zeoliths eingestellt werden kann. Siloxane besitzen auch die Fähigkeit zur Hydrophobierung und fördern somit auch die Hydrophobierung von Zeolith. Weitere Stoffe, wie sie in handelsüblichen Silanpräparaten oft enthalten sind, beeinträchtigen nicht deren erfindungsgemäßen Einsatz. Beispielsweise werden einige Silanpräparate vor der Anwendung mit Wasser oder anderen Lösungsmitteln verdünnt. Die Menge des eingesetzten Silans sollte zwischen 0,5 bis 8%(w/w) der zu behandelnden Menge photokatalytisch aktiven Zeoliths ausmachen. Vorzugsweise ist eine Silanmenge zwischen 3,5 bis 4%(w/w) des Zeoliths zu wählen.

Tritt das Silan mit der Zeolithoberfläche in Kontakt, erfolgt die Silanisierung innerhalb weniger Minuten. Die Menge des aufgebrachten Silans und die Umwälzungsdauer des Pulvers ist so zu wählen, dass mindestens 0,8 %(w/w) des Zeoliths silanisiert werden. Während der Silanisierung entstehen geringe Mengen flüchtiger Alkohole, die im Zuge des Mischungsvorganges gasförmig entweichen. Als organisches Silan eignen sich bevorzugt jene Silane, die bereits in der Bauchemie als Hydrophobierungsmittel eingesetzt werden, wie hochalkylierte Silane. Aber auch andere Silane können erfindungsgemäß verwendet werden. Beispiele für hochalkylierte Silane sind etwa iso-Butyltriethoxysjlan oder Octyltriethoxysilane wie Triethoxy(2,4,4-trimethylpentyl)silan.

Der so erhaltene hydrophobjerte und photokatalytisch aktivierte Zeolith kann nun in alkalische Bindemittelsysteme, wie sie für bautechnische oder bauchemische Zubereitungen üblich sind, eingebracht werden, ohne dass die Verarbeitungsfähigkeit des Bindemittelsystems beeinträchtigt wird. Das neue Bindemittelsystem mit der eingebrachten erfindungsgemäßen Zubereitung verfügt nun über die zusätzlichen Eigenschaften der hohen Absorptionsfähigkeit für gasförmige Schadstoffe und über eine photokatalytische Oxidationskraft für organische Schadstoffe.

Als alkalische Bindemittelsysteme eignen sich Systeme auf Basis von Zement, Kalkhydrat oder Silikate wie Wasserglas, Kieselsol, oder eine Kombination aus Wasserglas und Kieselsol oder Kieselsäureester. Sie sind charakterisiert durch einen pH-Wert zwischen pH 9 und pH 13.

Der wesentliche Vorteil der Erfindung besteht darin, dass die vorgeschlagene Kombination der Hydrophobierung und Beladung des natürlichen Zeoliths mit photokatalytisch aktiven Metalloxiden die Herstellung stabiler alkalischer Bindemittelsysteme im pH-Bereich zwischen pH 9 und pH 13 mit den absorptiven Eigenschaften des Zeoliths und den photokatalytischen Eigenschaften des Metalloxids ermöglicht und die photokatalytische Aktivität gegenüber alkalischen Bindemittelsystemen, in denen bloßes Titandioxid eingearbeitet wurde, erheblich verbessert ist.

Der photokatalytische Abbau von Schadstoffen in Beschichtungen auf alkalischer Basis wird durch die Erfindung rascher und vollständiger durchgeführt als durch herkömmliche Systeme ohne die Kombination von hydrophobiertem natürlichem Zeolith mit photokatalytisch aktivem Titandioxid. Die teilweise und mit der Zeit fortschreitende Inaktivierung des Photokatalysators durch das alkalische Milieu des Bindemittelsystems wird in der erfindungsgemäßen Kombination sehr deutlich reduziert.

Als weiterer Vorteil kann die Verringerung der erforderlichen Menge des Photokatalysators zur Erzielung einer bestimmten Abbaueffizienz um bis über 90 % angeführt werden. Es wurde beobachtet, dass ein Zehntel der Menge Photokatalysator in Bindemittelsystemen ausreicht, um dennoch sowohl eine beschleunigte photokatalytische Reaktion als auch einen vollständigeren Verlauf der Reaktion zu erreichen und diese Reaktivität über einen längeren Zeitraum im Bindemittelsystem zu erhalten.

Die Untersuchung des erfindungsgemäßen hydrophobierten photokatalytisch aktiven Zeoliths durch energiedispersive Röntgenspektroskopie (EDX) in Kombination mit Rasterelektronenmikroskopie und Mikrosondentechnik zeigte im Fall von Titan(IV)-oxid als photokatalytisch aktives Agens eine sehr homogene Verteilung von Nanopartikeln des Photokatalysators auf der Zeolithoberfläche. Die Zusammenballung von Nanopartikeln des Titandioxids zu größeren Aggregaten, die eine geringere Oberfläche für die katalytische Reaktion aufweisen, ist beim hydrophobierten Zeolith im Vergleich zur direkten Aufbringung von Titandioxid auf Zeolith weitaus geringer. Die mikroskopische Analyse zeigte ausserdem, dass die Nanopartikel bis tief in die Poren der Zeolithpartikel eingelagert sind. Eine homogene Verteilung des Photokatalysators ist wichtig, um die Zugänglichkeit für organische Schadstoffmoleküle und damit eine gute Ausnutzung der katalytischen Wirkung des Photokatalysators zu erreichen. Die Einlagerung des Photokatalysators in die tiefe Porenstruktur der Zeolithpartikel festigt den Zusammenhalt des Verbundes von Photokatalysator und hydrophobiertem Zeolith und wirkt den Ablösungseffekten wie Abrieb und Inaktivierung des Photokatalysators entgegen.

Ebenso ist es von Vorteil, dass das erfindungsgemäße Präparat kein organisches Bindemittel für den Photokatalysator am Trägermaterial benötigt und damit die Kreidung des Photokatalysators erheblich vermindert wird. Dadurch bleibt der Photokatalysator länger in der Beschichtung und die photokatalytischen Aktivitätsverluste in Abhängigkeit der Bewitterung und Bewitterungsdauer sind geringer.

Mit diesem Vorteil hängt ein weiterer Vorteil zusammen, nämlich das Auswaschen des Photokatalysators aus der Beschichtung. Das Auswaschen von Nanopartikeln des Photokatalysators aus der Beschichtung ist beim erfindungsgemäßen Einsatz des hydrophobierten photokatalytisch aktiven natürlichen Zeoliths wesentlich geringer als bei herkömmlichen Beschichtungssystemen. Dadurch wird wiederum der photokatalytische Aktivitätsverlust verringert und die Dauerhaftigkeit beziehungsweise Funktionalität der Beschichtung erheblich verlängert.

Für die Anwendung ist es von entscheidendem Vorteil, dass der photokatalytische Reaktivitätsverlust bei Lagerung eines Bindemittelsystems bei Verwendung des erfindungsgemäß hydrophobierten photokatalytisch aktiven Zeoliths vor der Aufbringung der Beschichtung deutlich geringer ist gegenüber den Systemen, die diese Bestandteile in nicht erfindungsgemäßer Herstellung enthalten.

Die Erfindung wird anhand von fünf Ausführungsbeispielen gemäß den Zeichnungen näher erläutert, wobei
Fig. 1 ein Punktdiagramm mit den Messwerten des Beispiels 1 zeigt,
Fig. 2 ein Punktdiagramm mit den Messwerten des Beispiels 2 zeigt,
Fig. 3 ein Punktdiagramm mit den Messwerten des Beispiels 3 zeigt.

### Beispiel 1

Es wurden zwei Silikatputze hergestellt, die mit "Putz A" und Putz B" bezeichnet werden. Beide Putze weisen die gleiche chemische Zusammensetzung auf und wurden unter den gleichen Bedingungen hergestellt, mit folgenden Ausnahmen. In Putz A wurden 5%(w/w) reines photokatalytisch aktives nanofeines Titandioxid eingemischt, in Putz B wurdenstattdessen 5%(w/w) eines erfindungsgemäß hydrophobierten und mit10%(w/w) photokatalytisch aktiven Titandioxids dotiertem Klinoptilolith eingemischt. Putz B weist daher nur 0,5% Titandioxid auf. Die Bindemittelbasis beider Putze ist 6 % (w/w) einer 28 prozentigen Lösung aus Kaliwasserglas. Als Füllstoff wurde Kalziumkarbonat eingesetzt. Die pH-Werte beider Putze lagen nach ihrer Zubereitung bei pH 12,8 +/- 0,2 für Putz A und pH 12, 6 +/- 0,2 für Putz B. Beide Putze wurden unmittelbar nach der Herstellung, also nach Zumischung der photokatalytisch aktiven Additive frisch auf Platten aufgezogen und 7 Tage getrocknet. Danach erfolgten Messungen der photokatalytischen Aktivität der Putze, indem beide Platten mit den Putzen jeweils getrennt in luftdicht verschlossenen 5-Liter-Boxen aus Plexiglas gegeben wurden und in den Gasraum der Behälter jeweils 2 Milliliter Formaldehyd eingesprüht wurden. In den jeweils folgenden 50 Minuten danach wurden die Boxen mit 4 UV-Lampen 300 W im Abstand von 90 cm bestrahlt und der durch, die Putze bewirkte photokatalytische Abbau des Formaldehyds zu Kohlendioxid durch den Anstieg der Konzentration von Kohlendioxid im Behälter mittels einer CO2-Sonde gemessen.

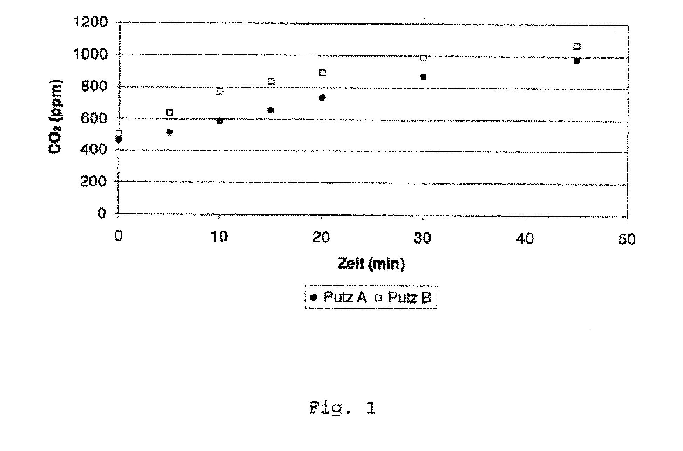

Die Ergebnisse sind in Figur 1 dargestellt. Sie zeigen bei gleicher Ausgangskonzentration von ca. 500 ppm Kohlendioxid eine vermehrte Freisetzung von CO2 durch den Putz B gegenüber dem Putz A, obwohl die photokatalytisch aktive Menge Titandioxid in Putz B nur ein Zehntel derjenigen von Putz A beträgt.

### Beispiel 2

Es wurden wieder zwei Silikatputze hergestellt, die mit "Putz C" und "Putz D" bezeichnet werden. Beide Putze wurden gleich wie in Beispiel 1 beschrieben hergestellt, wobei Putz C gleich war wie Putz A, und Putz D gleich war wie Putz B. Abweichend von Beispiel 1 wurden aber beide Putze einen Monat lang im feuchten Zustand gelagert, bevor sie auf Platten ausgestrichen wurden und 7 Tage lang getrocknet wurden. Danach folgte wiederum die Messung der photokatalytischen Aktivität beider Putze jeweils getrennt, nach dem bereits in Beispiel 1 beschriebenen Verfahren.

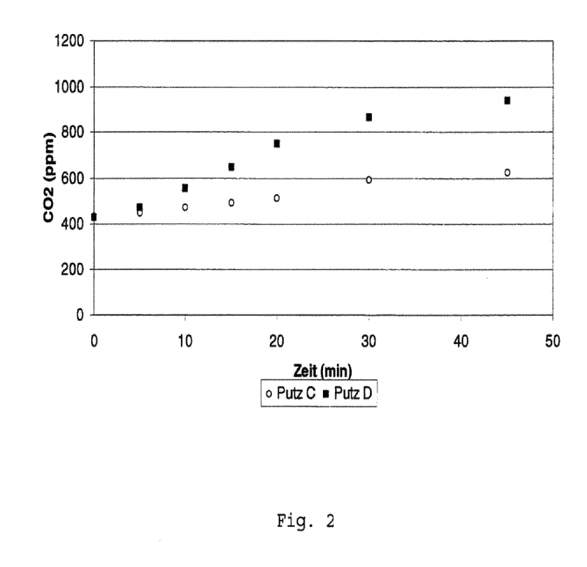

Die Ergebnisse sind in Figur 2 dargestellt. Sie zeigen bei gleicher Ausgangskonzentration von 425 ppm Kohlendioxid eine vermehrte Freisetzung von CO2 durch den Putz D gegenüber dem Putz C. Obwohl ein geringer Verlust der photokatalytischen Aktivität beider Putze durch die vorhergehende einmonatige feuchte Lagerung auftrat, war dieser Verlust bei Einsatz des erfindungsgemäßen hydrophobierten photokatalytisch aktiven Zeoliths in Putz D niedriger als beim Einsatz reinen Titandioxids in Putz C.

### Beispiel 3

Es wurden wieder zwei Silikatputze hergestellt, die mit "Putz E" und "Putz F" bezeichnet werden. Beide Putze wurden gleich wie in Beispiel 1 beschrieben hergestellt, wobei Putz E gleich war wie Putz A, und Putz F gleich war wie Putz B. Abweichend von Beispiel 1 wurden zwar beide Putze unmittelbar nach ihrer Herstellung auf Platten aufgezogen, aber danach einen Monat lang getrocknet. Danach folgte wiederum die Messung der photokatalytischen Aktivität beider Putze jeweils getrennt, nach dem bereits in Beispiel 1 beschriebenen Verfahren.

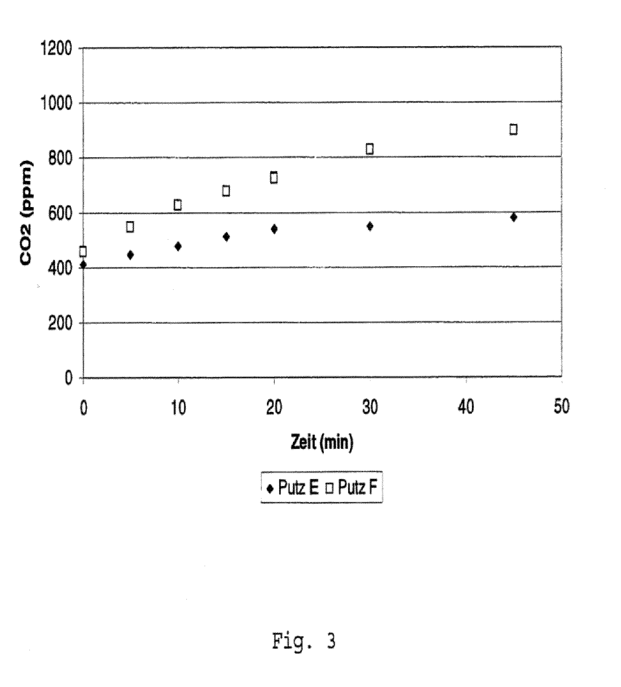

Die Ergebnisse sind in Figur 3 dargestellt. Sie zeigen eine vermehrte Freisetzung von C02 durch den Putz F gegenüber dem Putz E. Obwohl ein Verlust der photokatalytischen Aktivität beider Putze durch die vorhergehende einmonatige Trocknung auftrat, war dieser Verlust bei Einsatz des erfindungsgemäßen hydrophobierten photokatalytisch aktiven Zeoliths in Putz F niedriger als beim Einsatz reinen Titandioxids in Putz E.

### Beispiel 4

Es wurden zwei Silikatputze nach ähnlicher Zusammensetzung und Vorgangsweise hergestellt, wie in Beispiel 1 beschrieben. Diese werden mit "Putz G" und "Putz H" bezeichnet, wobei Putz G ähnlich war wie Putz A, jedoch 2 %(w/w) Ti02 enthielt, und Putz H ähnlich war wie Putz B, jedoch 20 %(w/w) erfindungsgemäß hydrophobierten und mit 10%(w/w) photokatalytisch aktivem Ti02 dotierten Klinoptiloliths enthielt. Beide Putze G und H enthielten daher jeweils 2 % Ti02. Die frisch zubereiteten Putze wurden jeweils auf mehrere Bleche aufgebracht. Abweichend von Beispiel 1 wurden beide Putzbleche 3 Tage getrocknet und danach 1000 Stunden lang jeweils separat im Testgerät zur Witterungsbeständigkeit QUV der Firma Q-Lab Corporation, Cleveland Ohio, U.S.A. künstlich bewittert, wobei in regelmäßigen Abständen eine Bestrahlung mit UV-Licht sowie eine Befeuchtung und Elution mit Wasser erfolgte. Das Eluat wurde in verschiedenen Abständen auf seinen Titangehalt chemisch untersucht. Die Ergebnisse sind in nachfolgender Tabelle 1 dargestellt:

**Tabelle 1: Titanmenge im Eluat nach unterschiedlich larqer künstlicher Bewitterung der Putze G und H im Testgerät QUV. Die Werte sind auf mg Titan pro Gramm Putz bezogen.**

| Putz | 504 h Inkubation | 1000 h Inkubation |
|---|---|---|
| Putz G | 0,72 | 1,08 |
| Putz H | 0,11 | 0,35 |

Die Ergebnisse bestätigen, dass Titandioxid aus dem Putz G stärker durch Leaching ausgewaschen wird als aus dem Putz H, wo Ti02 mit dem hydrophobierten Zeolith fest verbunden ist. Rasterelektronenenmikroskopische Aufnahmen mit energiedispersiver Röntgenspektroskopie zeigten, dass nach der Inkubation in Putz G weniger Ti02-Nanopartikel zu finden waren als in Putz H.

### Beispiel 5

Es wurden zwei Silikatputze gleicher Zusammensetzung und Vorgangsweise wie in Beispiel 4 hergestellt, die als "Putz I" und "Putz K" bezeichnet werden, wobei Putz I gleich war wie Putz G und Putz K gleich war wie Putz H. Beide Putze wurden dem gleichen Verfahren wie in Beispiel 4 unterworfen. Abweichend von Beispiel 4 wurden die Bleche nach 504 h beziehungsweise nach 1000 h aus dem Bewitterungsgerät herausgenommen, getrocknet und die Kreidung qualitativ nach ÖNORM EN ISO 4628-6 bestimmt. Die Ergebnisse sind in nachfolgender Tabelle 2 dargestellt:

**Tabelle 2: Qualitative Beurteilung der Kreidung nach künstlicher Bewitterung von Putz I und Putz K im Testgerät QUV gemäß ÖNORM EN ISO 4628-6. (+) = niedrige Kreidung, (++) = mäßige Kreidung, (+++) = hohe Kreidung, (++++) = sehr hohe Kreidung.**

| Putz | 504 h Inkubation | 1000 h Inkubation |
|---|---|---|
| Putz I | (+++) | (++++) |
| Putz K | (+) | (++) |

Die Ergebnisse zeigen, dass die Kreidung in Putz 1 mit reinem Ti02 viel höher war als in Putz K mit hydrophobiertem photokatalytisch aktivem Zeolith.

## Patentansprüche

1. Hydrophobierter, photokatalytisch aktiver natürlicher Zeolith für die Anwendung in alkalischen Bindemittelsystemen auf Basis von Zement, Silikaten oder Kalkhydrat, **dadurch gekennzeichnet, dass** als hydrophobierter photokatalytisch aktiver natürlicher Zeolith ein natürlicher Zeolith genommen wird, der zunächst gemeinsam mit Nanopartikeln einer photokatalytisch aktiven Substanz gemahlen wird und nachfolgend durch Silanisierung hydrophobiert wird, und wobei die Hydrophobierung des Zeoliths soweit erfolgt, dass nach der Vermischung des hydrophobierten photokatalytisch aktiven Zeoliths mit alkalischen Bindemittelsystemen einerseits seine Absorptionsfähigkeiten für organische Schadstoffe und die photokatalytische Reaktivität erhalten bleiben, und andererseits die Verarbeitungsfähigkeit und Stabilität des alkalischen Bindemittelsystems durch die Zugabe des hydrophobierten Zeoliths nicht beeinträchtigt wird.

2. Anwendung nach Anspruch 1, **dadurch gekennzeichnet, dass** als natürlicher Zeolith ein Klinoptilolith oder Chabazit oder Philipsit oder Mordenit oder Erionit genommen wird.

3. Anwendung nach einem oder mehreren der Ansprüche 1 und 2, **dadurch gekennzeichnet, dass** der durch Silanisierung hydrophobierte natürliche Zeolith zu mindestens 0,5 % (w/w) und maximal 8 % (w/w) silanisiert ist.

4. Anwendung nach einem oder mehreren der Ansprüche 1, 2 und 3, **dadurch gekennzeichnet, dass** die photokatalytisch aktive Substanz in der Menge von mindestens 0,1% (w/w) und maximal 10% (w/w) bezogen auf die Menge des Zeoliths eingesetzt wird.

5. Anwendung nach einem oder mehreren der Ansprüche 1, 2, 3 und 4, **dadurch gekennzeichnet, dass** als photokatalytisch aktive Substanz photokatalytisch aktives Titan(IV)-oxid oder Zirkonium(IV)-oxid oder Zink(IV)-oxid eingesetzt wird.

6. Anwendung nach einem oder mehreren der Ansprüche 1, 2, 3, 4 und 5, **dadurch gekennzeichnet, dass** als alkalische Bindemittelsysteme auf Basis von Silikat ein Bindemittel auf Basis von Wasserglas, Kieselsol, oder einer Kombination aus Wasserglas und Kieselsol oder Kieselsäureester eingesetzt werden.
